# EUROPEAN PATENT SPECIFICATION

(11) **EP 4 430 000 B1**
(45) Date of publication and mention of the grant of the patent: **29.07.2026**
(21) Application number: 22817887.7
(22) Date of filing: 10.11.2022
(51) Int. Cl.: C01B 25/223, C01B 25/232, C01B 25/234

(54) **PROCESS FOR THE PRODUCTION OF A PURIFIED PHOSPHORIC ACID SOLUTION AND/OR DICALCIUM PHOSPHATE SALTS**
VERFAHREN ZUR HERSTELLUNG EINER GEREINIGTEN PHOSPHORSÄURELÖSUNG UND/ODER VON DICALCIUMPHOSPHATSALZEN
PROCÉDÉ DE PRODUCTION D'UNE SOLUTION PURIFIÉE D'ACIDE PHOSPHORIQUE ET/OU DE SELS DE PHOSPHATE DICALCIQUE

(30) Priority: 12.11.2021 EP 21208046
(43) Date of publication of application: 18.09.2024
(73) Proprietor: Takhim for Technology and Business Services, 1300 Wavre (BE)
(72) Inventor: TAKHIM, Mohamed, 1325 Chaumont-Gistoux (BE)
(74) Representative: Icosa Europe
(86) International application number: PCT/EP2022/081462
(87) International publication number: WO 2023/083958

(56) References cited:
- EP-A2- 0 233 523
- WO-A1-2010/043262
- WO-A1-2013/133684
- US-A- 4 029 743
- US-A- 4 585 636
- US-A- 5 945 000

## Description

### Technical field

The present disclosure relates to a process for the production of a purified phosphoric acid solution and/or to a process for the production of dicalcium phosphate salts.

### Technical background

Phosphoric acid solutions can be obtained on the industrial scale by attacking natural phosphate with a strong acid such as hydrochloric acid, nitric acid and/or sulfuric acid. Depending on the origin of the natural phosphate, the phosphoric acid solution will contain metal impurities at variable concentrations, such as Fe, Al, Zn, Pb, Cd, Cu, U, Sb, *etc.* Depending on the use of phosphoric acid, these impurities can be a nuisance and must therefore be removed. Many processes are known for purifying phosphoric acid or producing high-purity phosphoric acid.

For example, EP2186774 and WO2010/043262 describe a process for the production of high-purity phosphoric acid from a phosphate salt. The recovered phosphoric acid comprises 62% of P₂O₅ and has a content of antimony that is below 0.05 ppm. Such high-purity phosphoric acid is suitable for the food, pharmaceutical, or electronic industry. The process comprises a first attack with a first strong acid to form a slurry of first phosphoric acid, and a first solid phase. These documents disclose an attack of phosphate rock with diluted acid, such as an aqueous solution of HCl diluted between 3 and 10 % w/w to obtain a first phosphoric acid solution and a first solid phase. After a first separation, the first phosphoric acid solution is neutralised by addition of a basic compound to obtain a second solution containing a second phosphate salt and a second solid phase. After a second separation, a second acid attack is performed on the second phosphate salt solution using a concentrated strong acid wherein the concentration of the second strong acid is between 25 to 40 % w/w.

For example, WO2013/133684 describes a process that comprises a step of filtration of phosphoric acid using a nanofiltration membrane, in which the nanofiltration membrane is an organic material on which is absorbed in at least one water-soluble polymer comprising at least one amine function, one aromatic amine function, one acid function and/or one alcohol function. The phosphoric acid solution to be purified is preferably obtained by the action of a strong acid onto natural phosphate and the concentration of the phosphoric acid solution to be purified is between 10 and 45 % P₂O₅.

US2015/0166343 describes a method for the recovery or the removal of the so-called "minor elements" consisting of iron, aluminium and magnesium (expressed as oxides), from wet-process phosphoric acid using a continuous ion-exchange approach. The method comprises the use of a continuous ion-exchange system, comprising several ion-exchange columns. The multiplicity of ion-exchangers increases the costs involved and is not environmentally friendly.

US8226910 describes a process for the extraction of uranium compounds from a wet-process phosphoric acid that includes lowering the iron concentration of the wet-process phosphoric acid and reducing the valency of any remaining ferric iron to ferrous iron and then extracting uranium compounds. The process can include separating a side stream from a feed stream of wet-process phosphoric acid, wherein the side stream has a greater concentration of uranium compounds than the feed stream by filtration. Extracting uranium compounds from the wet-process phosphoric acid can be performed by ion-exchange process or by solvent extraction.

US4029743 (HAUGE, D. O.) describes a process for the production of a purified phosphoric acid solution comprising the steps of provision of a rock phosphate, in particular Idaho phosphate ore; and acid attack of the rock phosphate by a mixture of sulfuric acid and phosphoric acid, wherein the mixture has a concentration of sulfuric acid about equal to the quantity stoichiometrically required to convert (for example, about 36 wt.%).

US5945000 (SKIDMORE, Howard. J. et al.) describes a method of purifying phosphoric acid by nanofiltration while prolonging the life of a nanofiltration membrane comprising passing a solution which contains the phosphoric acid through the nanofiltration membrane at a temperature ranging from 30°F (about -1°C) to 90°F (about 32°C). According to this document, the membranes have a longer life than they would if the temperature of the solution was greater than or equal to 110°F (about 43°C).

US5093088 (DERDALL, G. D. et al.) describes an apparatus for producing phosphoric acid by acidulation of a phosphate ore and a process carried out using such apparatus for the production of a purified phosphoric acid solution. The process comprises a step of acid attack of the phosphate ore by a concentrated phosphoric acid solution to obtain an attack mixture; wherein the phosphoric acid solution has a concentration from about 10 to 40 % w/w, preferably from about 20 to 30 % w/w. The process further comprises a step of filtration to obtain a substantially clear monocalcium phosphate liquor.

WO2008/038740 describes a process and equipment which make it possible to recover high-purity phosphoric acid useful as a recycled matter in the form of a portable high-concentration liquid from phosphoric acid-containing water at high efficiency by simple constitution and operation. The process comprises subjecting phosphoric acid-containing water to both cation-exchange and anion-exchange, subjecting the resulting water to reverse osmosis under the condition of pH of 3 or below, preferably under the conditions of pH of 3 or below and a phosphoric acid concentration of 1 to 15 wt.%, to transmit acids (except phosphoric acid) and water to a permeating fluid chamber side with phosphoric acid concentrated on a concentrated fluid chamber side, desalting the permeating fluid with an ion-exchanger to recover pure water, and evaporating the concentrated fluid with an evaporator to remove volatile components and water and recover a concentrated phosphoric acid solution.

There is still a need for an improved process for the production of purified phosphoric acid and/or dicalcium phosphate salts from mineral phosphate raw materials, such as phosphate rock or fly ashes of mono incinerated sludge, that is cost-efficient which offers low chemicals and energy consumption, easy operation and environmentally friendliness. In particular, there is still a need for an improved process for the production of purified phosphoric and/or dicalcium phosphate salts from mineral phosphate raw materials, such as phosphate rock or fly ashes of mono incinerated sludge, that is cost-efficient which offers low chemicals and energy consumption, easy operation and environmental friendliness with reduced requirements in water.

### Summary

The present disclosure aims to address at least one of the problems and disadvantages encountered in the prior art with a process for the production of purified phosphoric acid solution from mineral phosphate sources that are highly rich in impurities. The process according to the present disclosure comprises a step of production of monocalcium phosphate (MCP) in the solid form from a phosphate mineral source.

According to a first aspect, the present invention provides a process for the production of a purified phosphoric acid solution, wherein the process comprises the following steps:
(a) provision of a phosphate mineral source; with preference, the phosphate mineral source is selected from phosphate rock, fly ashes, and a mixture thereof;
(b) acid attack of the phosphate mineral source by a concentrated strong acid aqueous solution to obtain an attack mixture;
   wherein step (b) comprises the sub-steps of:
   (b1) attack of the phosphate mineral source by a concentrated strong acid aqueous solution to form an attack mixture; wherein the strong acid is selected from HCl, H₂SO₄, HNO₃, and a mixture thereof; and wherein the strong acid aqueous solution has a concentration of acid that is above 20 wt.% based on the total weight of the strong acid aqueous solution;
   (b2) optional addition of water to form a wet attack mixture; and
   (b3) maturation of the attack mixture or the wet attack mixture for more than 6 hours to obtain a maturated attack mixture; wherein the content of water in the attack mixture during the maturation step is less than 25 wt.% of the total weight of the attack mixture;
(c) dilution in water and/or a water-containing solution of the maturated attack mixture to obtain a monocalcium phosphate (MCP) solution;
(d) filtration of the monocalcium phosphate solution to obtain a residue comprising one or more impurities and a filtrate being a filtered monocalcium phosphate solution;
(e) acidulation of the filtered monocalcium phosphate (MCP) solution by a strong acid selected from HCl, H₂SO₄, HNO₃, and a mixture thereof, to obtain a phosphoric acid solution;
(f) optional pre-purification of the phosphoric acid solution to obtain a pre-purified phosphoric acid solution; and
(g) separation through a membrane of the phosphoric acid solution or of the pre-purified phosphoric acid solution to recover a purified phosphoric acid solution, wherein the membrane is selected from a diffusion dialysis (DD) acid separation membrane, an electrodialysis-driven depletion membrane, and a nanofiltration membrane.

In a preferred embodiment, the membrane used in step (g) is selected from a diffusion dialysis (DD) acid separation membrane or an electrodialysis-driven depletion membrane; preferably, the membrane used in step (g) is a diffusion dialysis (DD) acid separation membrane.

It has been found that the combination of the production of monocalcium phosphate (MCP) in a solid form with a further dilution and acidulation allows the production of a phosphoric acid solution in an effective and cost-efficient way since the volume of phosphoric acid solution that needs to be purified is reduced. Also, this allows a reduction of the water consumption of the overall process. In addition, the acid attack is made in two stages, wherein the first stage (*i*.*e.,* steps (b) and (c)) results in the MCP formation and the second stage *(i.e.,* step (e)) in the phosphoric acid releasing. Between the two stages, a possible purification of the solution from one or more impurities (such as insoluble materials) can be carried out. For example, the one or more impurities comprise one or more metals, gypsum and/or fluoride salts.

Advantageously, the process of production of purified phosphoric acid of the present disclosure is rather versatile since it further allows the production of the corresponding dicalcium phosphate (DCP) salts starting from the raw phosphate mineral source by neutralisation of the purified phosphoric acid with a calcium source.

For example, the phosphate mineral source comprises from 1 to 40 wt.% of P₂O₅ based on the total weight of said phosphate mineral source, preferably from 5 to 35 wt.%.

For example, the phosphate mineral source is an orthophosphate mineral source.

For example, when the strong acid selected at step (b) is HCl and/or HNO₃, the strong acid aqueous solution has a concentration of acid ranging between 20 wt.% and 33 wt.% based on the total weight of the strong acid aqueous solution, or between 22 wt.% and 33 wt.%, or between 24 wt.% and 33 wt.%, or between 26 wt.% and 33 wt.%.

For example, when the strong acid selected at step (b) is H₂SO₄, the strong acid aqueous solution has a concentration of acid ranging between 20 wt.% and 98 wt.% based on the total weight of the strong acid aqueous solution, preferably between 25 wt.% and 80wt.%, more preferably between 30 wt.% and 75 wt.%, even more preferably between 35 wt.% and 65 wt.%.

For example, the sub-step (b1) of attack of the phosphate mineral source by a concentrated strong acid aqueous solution is performed for at least 5 minutes, preferably at least 10 minutes, more preferably at least 15 minutes.

For example, the content of water in the attack mixture during the maturation step is less than 20 wt.%, preferably less than 15 wt.%.

For example, the step (b3) of maturation of the attack mixture and/or of the wet attack mixture is performed for more than 8 hours; preferably for at least 10 hours and more preferably for at least 15 hours or for at least 24 hours or for at least 30 hours; for example, for at least 2 days or for more than 48 hours; for example, for at least 3 days; for example, for at least 1 week, for example, for at least 2 weeks.

In an embodiment, the phosphate mineral source is fly ashes and the step (b3) of maturation of the attack mixture and/or of the wet attack mixture is performed for at least 8 hours. preferably for at least 10 hours and more preferably for at least 15 hours or for at least 24 hours or for at least 30 hours; for example, of for at least 2 days or for more than 48 hours.

In an embodiment, the phosphate mineral source is or comprises phosphate rock and the step (b3) of maturation of the attack mixture and/or of the wet attack mixture is performed for more than 48 hours; preferably for at least 3 days; more preferably for at least 1 week, even more preferably for at least 2 weeks.

For example, in step (d) the one or more impurities of the residue comprise one or more metals, gypsum and/or fluoride salts.

In an embodiment, step (d) filtration of the monocalcium phosphate solution further comprises a sub-step of neutralization that is performed before filtration; wherein the sub-step of neutralization comprises adjusting the pH of the monocalcium phosphate solution to a pH that is ranging from 1.0 to 3.0 to precipitate one or more impurities. With preference, the sub-step of neutralisation is made using a source of calcium.

For example, the one or more impurities comprise one or more metals, gypsum and/or fluoride salts.

For example, the one or more impurities comprise a fluoride salt being CaF₂. For example, the one or more impurities comprise one or more metals, such as Fe and/or Al. Then, the filtration of the solution results in a residue comprising one or more impurities (such as one or more metals, gypsum and/or fluoride salts), and a filtrate being a filtered monocalcium phosphate solution. Step (e) is an acidulation of the filtered monocalcium phosphate solution by a strong acid selected from HCl, H₂SO₄, HNO₃, and a mixture thereof, to obtain a phosphoric acid solution.

Step (d) of filtration allows for reducing the content of some metals, such as Fe and Al, in the MCP solution. When the neutralization sub-step is performed, fluor can be removed thanks to the precipitation of fluoride salts. To proceed with filtration of the insoluble material between the two stages of the acid attack allows making a first purification before the acid phosphoric is recovered. With preference, said step (d) of neutralisation is made using a source of calcium that is or comprises CaCO₃ and/or Ca(OH))₂.

In an embodiment, step (e) is an acidulation is conducted to obtain a phosphoric acid solution having a pH ranging from 0 to 2.5; with preference, from 0 to 1.5; more preferably from 0 to 1.0; even more preferably from 0 to 0.8; and most preferably from 0 to 0.5.

In an embodiment, the membrane used at step (g) is a composite membrane comprising a film and a porous support material, wherein the film comprises a polymer matrix and is layered on the porous support material; wherein the polymer matrix is one or more selected from the group comprising polyolefins, polysulfones, polyethers, polysulfonamides, polyamines, polysulfides, and melamine polymers; with preference, the porous support material has a thickness which ranges from 0.5 µm to 300 µm and/or the film thickness is at most 1.5 µm.

For example, the polymer matrix is one or more selected from the group comprising polysulfones, polysulfonamides, polyamines, and melamine polymers; with preference, the polymer matrix is or comprises polysulfonamides. For example, the porous support material is one or more selected from the group comprising polyamide, polysulfone, polyethersulfone, polyvinylidene fluoride, polyvinylchloride, ceramics and porous glass; with preference, the porous support material is one or more selected from the group comprising polyamide, polysulfone, polyethersulfone, polyvinylidene fluoride and polyvinylchloride; more preferably, the porous support material is or comprises polysulfone.

For example, the polymer matrix is selected from polysulfonamides and the porous support material comprises polysulfone; with preference, the porous support material has a thickness that ranges from 0.5 µm to 300 µm and/or the film thickness is at most 1.5 µm.

For example, step (g) is conducted at a temperature ranging from 10°C to 45°C; preferably, from 20°C to 40°C; more preferably, from 35°C to 40°C.

For example, step (g) is conducted at a pressure ranging from 0.1 to 7.0 MPa; preferably, from 0.1 to 6.0 MPa; more preferably, from 0.1 to 5.5 MPa.

With preference, step (g) is a step of separation through a diffusion dialysis (DD) acid separation membrane of the phosphoric acid solution to recover purified phosphoric acid solution. In that case, one or more of the following features can advantageously define step (g):
- step (g) is conducted at a temperature ranging from 10°C to 45°C; preferably, from 20°C to 40°C; more preferably, from 35°C to 40°C.
- step (g) is conducted at a pressure ranging from 0.1 to 7.0 MPa, preferably, from 0.1 to 6.0 MPa; more preferably, from 0.1 to 5.5 MPa.
- step (g) is performed in an anionic ion exchange (AIE) membrane unit that comprises a feed tank and at least one plate and a frame comprising an anionic exchange membrane sheet, and the process comprises a step of recycling of at least a part of the residual acid solution exiting the anionic ion exchange membrane unit to the feed tank; with preference, the part of the pure phosphoric acid that is recycled to the feed tank is submitted to a step of micro-filtration.

In an embodiment, that can be combined with the other embodiments, step (g) comprises the following sub-steps:
g1) collecting the phosphoric acid solution of step (e) and performing a first separation through a diffusion dialysis (DD) acid separation membrane to obtain a first purified phosphoric acid solution and a first residual acid solution;
g2) collecting the first purified phosphoric acid solution of sub-step (g1) and performing a second separation through a diffusion dialysis (DD) acid separation membrane to obtain a second purified phosphoric acid solution and a second residual acid solution; with preference, the second residual acid solution is recycled to the step (b) as the concentrated strong acid aqueous solution.

When the second residual acid solution is recycled to step (b), it allows to perform the cake washing and consequently maximises the yield process of phosphate recovery.

In an embodiment, the process further comprises a step (f) of pre-purification of the phosphoric acid solution obtained at step (e), said step (f) being conducted before step (g) of separation through a membrane of the phosphoric acid solution, wherein the membrane is selected from a diffusion dialysis (DD) acid separation membrane, an electrodialysis-driven depletion membrane, and a nanofiltration membrane, preferably wherein the membrane is a diffusion dialysis (DD) acid separation membrane.

For example, step (f) of pre-purification comprises a step of the addition of activated carbon to the phosphoric acid solution obtained at step (e).

For example, the step (f) of pre-purification of the phosphoric acid solution obtained at step (e) comprises one or more filtering steps, wherein at least one filtering step is a microfiltration step that is conducted to remove solid particles over 10 µm; with preference, over 1 µm.

For example, the phosphoric acid solution and/or the pre-purified phosphoric acid solution to be used for the step (g) of separation through a membrane selected from a diffusion dialysis (DD) acid separation membrane, an electrodialysis-driven depletion membrane, and a nanofiltration membrane to recover a purified phosphoric acid solution comprises phosphoric acid in a content that is inferior to 30 wt.% of P₂O₅ based on the total weight of the phosphoric acid solution or of the pre-purified phosphoric acid solution respectively, preferably inferior to 25 wt.%, more preferably inferior to 20 wt.%, even more preferably inferior to 16 wt.%, most preferably inferior to 15 wt.%.

For example, the phosphoric acid solution and/or the pre-purified phosphoric acid solution to be used for the step (g) of separation through a membrane comprises phosphoric acid in a content ranging from 2 to 35 wt.% or from 2 to 30 wt.% or from 2 to 20 wt.% of P₂O₅ based on the total weight of the phosphoric acid solution or of the pre-purified phosphoric acid solution respectively; with preference, ranging from 3 to 15 wt.%, or from 3 to 14 wt.%, or from 5 to 10 wt.%.

For example, the phosphoric acid solution and/or the pre-purified phosphoric acid solution to be used for the step (g) of separation through a diffusion dialysis (DD) acid separation membrane to recover a purified phosphoric acid solution comprises phosphoric acid in a content that is inferior to 30 wt.% of P₂O₅ based on the total weight of the phosphoric acid solution or of the pre-purified phosphoric acid solution respectively, preferably inferior to 25 wt.%, more preferably inferior to 20 wt.%, even more preferably inferior to 16 wt.%, most preferably inferior to 15 wt.%.

For example, the phosphoric acid solution and/or the pre-purified phosphoric acid solution to be used for the step (g) of separation through a diffusion dialysis (DD) acid separation membrane to recover a purified phosphoric acid solution comprises phosphoric acid in a content ranging from 2 to 30 wt.% of P₂O₅ based on the total weight of the phosphoric acid solution or of the pre-purified phosphoric acid solution respectively; preferably, ranging from 2 to 20 wt.%; more preferably from 3 to 15 wt.%; even more preferably, from 3 to 14 wt.%.

Advantageously, the molar ratio of H⁺/P of the phosphoric acid solution or the pre-purified phosphoric acid solution before step (g) is adjusted to be ranging between 3.0 and 4.0, preferably between 3.1 and 3.9, more preferably between 3.2 and 3.8, or between 3.3 and 3.8.

For example, adjusting the molar ratio of H⁺/P of the phosphoric acid solution or the pre-purified phosphoric acid solution before step (g) is done by the addition of a strong acid. With preference, the strong acid is selected from HCl, H₂SO₄, HNO₃, and a mixture thereof.

For example, the process further comprises a step (j) of concentrating the recovered purified phosphoric acid solution of step (g) to obtain a concentrated purified phosphoric acid solution.

For example, the process may further comprise a step (h) of recycling a part of the pre-purified phosphoric acid solution to obtain a recycled pre-purified phosphoric acid solution and/or of recycling a part of the residual acid solution obtained at step (g); and the process further comprises the step (i) of diluting the residue obtained at step (d) in the recycled pre-purified phosphoric acid solution and/or in the residual acid solution to form a residue solution. With preference, the residue solution is filtered resulting in a cake residue and a water-containing solution that can be recycled in step (c) to dilute the attack mixture.

For example, the process for the production of purified phosphoric acid solution according to the present invention comprises the following steps:
(a) provision of a phosphate mineral source; with preference, the phosphate mineral source is selected from phosphate rock, fly ashes, and a mixture thereof;
(b) acid attack of the phosphate mineral source by a concentrated strong acid aqueous solution to obtain an attack mixture;
   wherein step (b) comprises the sub-steps of:
   (b1) attack of the phosphate mineral source by a concentrated strong acid aqueous solution to form an attack mixture; wherein the strong acid is selected from HCl, H₂SO₄, HNO₃, and a mixture thereof; and wherein the strong acid aqueous solution has a concentration of acid that is above 20 wt.% based on the total weight of the strong acid aqueous solution;
   (b2) optional addition of water to form a wet attack mixture; and
   (b3) maturation of the attack mixture or the wet attack mixture for more than 6 hours to obtain a maturated attack mixture; wherein the content of water in the attack mixture during the maturation step is less than 25 wt.% of the total weight of the attack mixture;
(c) dilution in water and/or a water-containing solution of the maturated attack mixture recycled from sub-step (b3) to obtain a monocalcium phosphate solution;
(d) filtration of the monocalcium phosphate solution to obtain a residue comprising one or more impurities and a filtrate being a filtered monocalcium phosphate solution; optionally an additional sub-step of neutralization of the monocalcium phosphate solution obtained at step (c) is performed before the filtration, wherein said neutralization comprises adjusting the pH of the monocalcium phosphate solution to a pH that is ranging from 1.0 to 3.0 to precipitate one or more impurities selected from one or more metals, gypsum or a fluoride salt;
(e) acidulation of the filtered monocalcium phosphate solution by a strong acid selected from HCl, H₂SO₄, HNO₃, and a mixture thereof, to obtain a phosphoric acid solution;
(f) optional pre-purification of the phosphoric acid solution to obtain a pre-purified phosphoric acid solution;
(g) separation through a membrane of the phosphoric acid solution obtained at step (e) and/or of the pre-purified phosphoric acid solution when step (f) is carried out to recover a purified acid solution, wherein the membrane is selected from a diffusion dialysis (DD) acid separation membrane, an electrodialysis-driven depletion membrane, and a nanofiltration membrane; preferably from a diffusion dialysis (DD) acid separation membrane;
(h) optional recycling of a part of the pre-purified phosphoric acid solution to obtain a recycled pre-purified phosphoric acid solution and/or optional recycling of a part of the residual acid solution obtained at step (g); and
(i) optionally, when step (h) is carried out, diluting the residue obtained at step (d) in the recycled pre-purified phosphoric acid solution and/or in the residual acid solution to form a residue solution; with preference, the residue solution is filtered resulting in a cake residue and a water-containing solution that is recycled in step (c) to dilute the attack mixture;
(j) optionally, concentrating the purified phosphoric acid solution of step (g) to obtain a concentrated purified phosphoric acid solution.

According to a second aspect, the present invention provides a process of production of dicalcium phosphate (DCP) salt, remarkable in that it comprises the process for the production of a purified phosphoric acid solution according to the first aspect, wherein the process of production of dicalcium phosphate salt further comprises a step (k) of crystallization of dicalcium phosphate salt comprising one or more sub-steps of neutralisation of the purified phosphoric acid solution or of the concentrated purified phosphoric acid solution, wherein the neutralisation is made using a source of calcium; with preference, the source of calcium is or comprises CaCO₃ and/or Ca(OH)₂.

For example, the process comprises two sub-steps of neutralisation, wherein the first sub-step of neutralisation is a partial neutralisation and results in a de-sulphation of the purified phosphoric acid solution and in that the second sub-step of neutralisation results in the crystallization of dicalcium phosphate salt.

Advantageously, when the process for the production of a purified phosphoric acid solution according to the first aspect comprises a step (j), the concentrated purified phosphoric acid solution of step (j) comprises two sub-steps of neutralisation to perform said step (k).

With preference, the neutralisation of the purified phosphoric acid solution or of the concentrated purified phosphoric acid solution comprises the first sub-step of adjusting the pH of the purified phosphoric acid solution to a pH that is ranging from 1.0 to 3.0 to precipitate gypsum and a second sub-step of adding limewater to crystalize the dicalcium phosphate salt. With preference, said step (k) of neutralisation is made using a source of calcium, being advantageously or comprising advantageously CaCO₃ and/or Ca(OH))₂.

Thus, in an embodiment, the process of production of dicalcium phosphate salt according to the present invention comprises the following steps:
(a) provision of a phosphate mineral source; with preference, the phosphate mineral source is selected from phosphate rock and/or fly ashes;
(b) acid attack of the phosphate mineral source by a concentrated strong acid aqueous solution to obtain an attack mixture;
   wherein step (b) comprises the sub-steps of:
   (b1) attack of the phosphate mineral source by a concentrated strong acid aqueous solution to form an attack mixture; wherein the strong acid is selected from HCl, H₂SO₄, HNO₃, and a mixture thereof; and wherein the strong acid aqueous solution has a concentration of acid that is above 20 wt.% based on the total weight of the strong acid aqueous solution;
   (b2) optional addition of water to form a wet attack mixture; and
   (b3) maturation of the attack mixture or the wet attack mixture for more than 6 hours to obtain a maturated attack mixture; wherein the content of water in the attack mixture during the maturation step is less than 25 wt.% of the total weight of the attack mixture;
(c) dilution in water and/or a water-containing solution of the maturated attack mixture recycled from sub-step (b3) to obtain a monocalcium phosphate solution;
(d) filtration of the monocalcium phosphate solution to obtain a residue comprising one or more impurities and a filtrate being a filtered monocalcium phosphate solution; optionally an additional sub-step of neutralization of the monocalcium phosphate solution obtained at step (c) is performed before the filtration, wherein said neutralization comprises adjusting the pH of the monocalcium phosphate solution to a pH that is ranging from 1.0 to 3.0 to precipitate one or more impurities selected from one or more metals, gypsum or a fluoride salt;
(e) acidulation of the filtered monocalcium phosphate solution by a strong acid selected from HCl, H₂SO₄, HNO₃, and a mixture thereof, to obtain a phosphoric acid solution;
(f) optional pre-purification of the phosphoric acid solution to obtain a pre-purified phosphoric acid solution;
(g) separation through a membrane of the phosphoric acid solution obtained at step (e) and/or of the pre-purified phosphoric acid solution when step (f) is carried out to recover a purified acid solution, wherein the membrane is selected from a diffusion dialysis (DD) acid separation membrane, an electrodialysis-driven depletion membrane, and a nanofiltration membrane; preferably from a diffusion dialysis (DD) acid separation membrane;
(h) optional recycling of a part of the pre-purified phosphoric acid solution to obtain a recycled pre-purified phosphoric acid solution and/or optional recycling of a part of the residual acid solution obtained at step (g); and
(i) optionally, when step (h) is carried out, diluting the residue obtained at step (d) in the recycled pre-purified phosphoric acid solution and/or in the residual acid solution to form a residue solution; with preference, the residue solution is filtered resulting in a cake residue and a water-containing solution that is recycled in step (c) to dilute the attack mixture;
(j) optionally concentrating the purified phosphoric acid solution of step (g) to obtain a concentrated purified phosphoric acid solution;
   and
(k) crystallization of dicalcium phosphate salt comprising one or more sub-steps of neutralisation of the purified phosphoric acid solution of step (g) or of the concentrated purified phosphoric acid solution of step (j) wherein the neutralisation is made using a source of calcium; with preference, the source of calcium is or comprise CaCO₃ and/or Ca(OH)₂.

### Description of the figures

**Figure** 1 is a flow chart of the process.
**Figure** 2 is a scheme of an anion exchange diffusion dialysis (DD) acid separation membrane.

### Detailed description

The terms "comprising", "comprises" and "comprised of" as used herein are synonymous with "including" and "includes" or "containing" and "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g., 1 to 5 can include 1, 2, 3, 4, 5 when referring to several elements, and can also include 1.5, 2, 2.75 and 3.80, when referring to measurements). The recitation of endpoints also includes the recited endpoint values themselves (e.g., from 1.0 to 5.0 includes both 1.0 and 5.0). Any numerical range recited herein is intended to include all sub-ranges subsumed therein.

Superphosphate (SSP) comprises both monocalcium phosphate (MCP) and gypsum.

The particular features, structures, characteristics or embodiments may be combined in any suitable manner, as would be apparent to a person skilled in the art from this disclosure, in one or more embodiments.

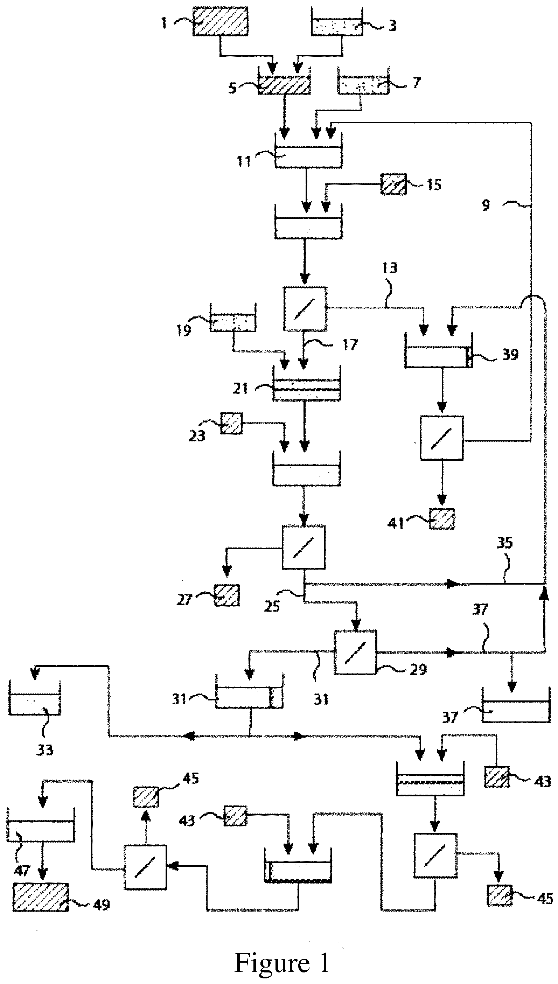

The process will be described by reference to Figure 1. The disclosure relates to a process for the production of purified phosphoric acid solution (31,33) that includes
a step (a) of the provision of a phosphate mineral source 1; wherein, with preference, the phosphate mineral source 1 is selected from phosphate rock and/or fly ashes;
a step (b) of acid attack of the phosphate mineral source 1 by a concentrated strong acid aqueous solution 3 to obtain an attack mixture 5;
   wherein step (b) comprises the sub-steps of:
   (b1) attack of the phosphate mineral source 1 by a concentrated strong acid aqueous solution 3 to form an attack mixture 5; wherein the strong acid is selected from HCl, H₂SO₄, HNO₃, and a mixture thereof; and wherein the strong acid aqueous solution 3 has a concentration of acid that is above 20 wt.% based on the total weight of the strong acid aqueous solution 3;
   (b2) optional addition of water to form a wet attack mixture; and
   (b3) maturation of the attack mixture 5 or the wet attack mixture for more than 6 hours to obtain a maturated attack mixture; wherein the content of water in the attack mixture 5 during the maturation step is less than 25 wt.% of the total weight of the attack mixture 5;
a step (c) of dilution in water 7 and/or a water-containing solution 9 of the maturated attack mixture 5 to obtain monocalcium phosphate solution 11;
a step (d) of filtration of the monocalcium phosphate solution 11 to obtain a residue 13 comprising one or more impurities and a filtrate being a filtered monocalcium phosphate solution 17; optionally an additional sub-step of neutralization of the monocalcium phosphate solution 11 obtained at step (c) is performed before the filtration, wherein said neutralization comprises adjusting the pH of the monocalcium phosphate solution 11 to a pH that is ranging from 1.0 to 3.0 to precipitate one or more impurities;
a step (e) of acidulation of the filtered monocalcium phosphate solution 17 by a strong acid 19 selected from HCl, H₂SO₄, HNO₃, and a mixture thereof, to obtain a phosphoric acid solution 21; and
a step (g) of separation through a membrane 29 of the phosphoric acid solution 21 or of the pre-purified phosphoric acid solution 25 to recover a purified phosphoric acid solution 31, wherein the membrane is selected from a diffusion dialysis (DD) acid separation membrane, an electrodialysis-driven depletion membrane, and a nanofiltration membrane.

For example, in step (d) the one or more impurities comprise one or more metals, gypsum and/or fluoride salts.

The process may comprise the step (h) of recycling a part of the pre-purified phosphoric acid solution 25 to obtain a recycled pre-purified phosphoric acid solution 35 and/or of recycling a part of the residual acid solution 37 obtained at step (g). With preference, the process may further comprise step (i) when step (h) is carried out. Said step (i) is the step of diluting the residue 13 obtained at step (d) in the recycled pre-purified phosphoric acid solution 35 and/or in the residual acid solution 37 to wash the residue 13 by forming a residue solution 39 and further filtering the residue solution 39 to obtain a cake residue 41 and a water-containing solution 9 that can be used in step (c).

The water-containing solution 9 used at step (c) of dilution of the attack mixture 5 can also be or comprise the recycled pre-purified phosphoric acid solution 35 and/or the residual acid solution 37.

The part of the residual acid solution 37 that is not recycled is evacuated.

The process may comprise a step (d) of neutralisation of the monocalcium phosphate solution 11 obtained at step (c). Said neutralisation operation is performed by adjusting the pH of the monocalcium phosphate solution to a pH that is ranging from 1.0 to 3.0 to precipitate one or more impurities 13 comprising one or more metals (such as Fe and/or Al), gypsum or a fluoride salt (such as CaF₂). Said step (d) can be made concomitantly with step (c) which is a step related to the dissolving of the MCP solution. With preference, said step (d) of neutralisation is made using a source of calcium 15, being advantageously or comprising advantageously CaCO₃ and/or Ca(OH))₂.

For example, the neutralisation operation is performed by adjusting the pH of the monocalcium phosphate solution 11 to a pH that is ranging from 1.2 to 2.9; preferably from 1.5 to 2.8; more preferably from 1.8 to 2.5.

Upon precipitation, a residue 13 comprising one or more impurities is filtrated. For example, residue 13 comprises one or more metals, gypsum or fluoride salts. The residue 13 comprising one or more impurities can be washed and filtered with the washing water being a water-containing solution 9 that is recycled in step (c) to maximise the yield of the phosphoric acid solution of the overall process.

The process may comprise a step (f) of pre-purification of the phosphoric acid solution 21 that is conducted before step (g) of separation through a membrane selected from a diffusion dialysis (DD) acid separation membrane, an electrodialysis-driven depletion membrane, and a nanofiltration membrane. For example, step (f) pre-purification of the phosphoric acid solution 21 comprises a sub-step of the addition of activated carbon and/or a sub-step of filtration.

The process may comprise a step (j) of concentrating the purified phosphoric acid solution 31 of step (g) to obtain a concentrated purified phosphoric acid solution 33.

Therefore, the process for the production of a purified phosphoric acid solution according to the present invention may comprise the following steps:
(a) provision of a phosphate mineral source; with preference, the phosphate mineral source is selected from phosphate rock and/or fly ashes;
(b) acid attack of the phosphate mineral source by a concentrated strong acid aqueous solution to obtain an attack mixture;
   wherein step (b) comprises the sub-steps of:
   (b1) attack of the phosphate mineral source by a concentrated strong acid aqueous solution to form an attack mixture; wherein the strong acid is selected from HCl, H₂SO₄, HNO₃, and a mixture thereof; and wherein the strong acid aqueous solution has a concentration of acid that is above 20 wt.% based on the total weight of the strong acid aqueous solution;
   (b2) optional addition of water to form a wet attack mixture; and
(b3) maturation of the attack mixture or the wet attack mixture for more than 6 hours to obtain a maturated attack mixture; wherein the content of water in the attack mixture during the maturation step is less than 25 wt.% of the total weight of the attack mixture;(c) dilution in water and/or a water-containing solution of the attack mixture to obtain a monocalcium phosphate solution;
(d) filtration of the monocalcium phosphate solution to obtain a residue comprising one or more impurities and a filtrate being a filtered monocalcium phosphate solution; wherein the step (d) of filtration of the monocalcium phosphate solution further comprises a sub-step of neutralization that is performed before filtration; and wherein the sub-step of neutralization comprises adjusting the pH of the monocalcium phosphate solution to a pH that is ranging from 1.0 to 3.0 to precipitate one or more impurities;
(e) acidulation of the filtered monocalcium phosphate solution by a strong acid selected from HCl, H₂SO₄, HNO₃, and a mixture thereof, to obtain a phosphoric acid solution;
(f) optional pre-purification of the phosphoric acid solution to obtain a pre-purified phosphoric acid solution;
(g) separation through a membrane of the phosphoric acid solution to recover a purified phosphoric acid solution, wherein the membrane is selected from a diffusion dialysis (DD) acid separation membrane, an electrodialysis-driven depletion membrane, and a nanofiltration membrane, preferably the membrane is a diffusion dialysis (DD) acid separation membrane;
(j) optional concentration of the purified phosphoric acid solution of step (g) to obtain a concentrated purified phosphoric acid solution.

The disclosure also relates to a process for the production of dicalcium phosphate salt (47, 49) comprising the production of a purified phosphoric acid solution (31, 33) according to the present disclosure, wherein the process further comprises a step (k) of crystallization of dicalcium phosphate salt 47 comprising one or more sub-steps neutralisation of the purified phosphoric acid solution 31 or of the concentrated purified phosphoric acid solution 33, wherein the neutralisation is made using a source of calcium 43. With preference, the source of calcium 43 is or comprises CaCO₃ and/or Ca(OH)₂. The one or more sub-steps of neutralisation further comprise filtration with the removal of residue 45 comprising gypsum.

Once the dicalcium phosphate salt 47 is recovered, a step (I) of drying said dicalcium phosphate salt 47 can be carried out to obtain pure dicalcium phosphate salt 49.

### Step (a) of the provision of a phosphate mineral source 1 preferably selected from phosphate rock and/or fly ashes

In a preferred embodiment, the phosphate mineral source 1 is selected from phosphate rock and/or fly ashes.

For example, the phosphate mineral source 1 is selected to comprise from 1 to 45 wt.% of P₂O₅ based on the total weight of said phosphate mineral source 1; preferably, from 2 to 40 wt.%; more preferably, from 4 to 35 wt.%; and even more preferably, from 6 to 30 wt.%.

For example, the phosphate mineral source 1 is selected to comprise less than 20 wt.% of P₂O₅ based on the total weight of said phosphate mineral source 1; preferably, less than 18 wt.%; more preferably, less than 15 wt.%; even more preferably, less than 10 wt.%; and most preferably, from 1 to 9 wt.%.

For example, the phosphate rock is selected to comprise from 5 to 45 wt.% of P₂O₅ based on the total weight of the phosphate rock; preferably, from 8 to 40 wt.%; more preferably, from 10 to 35 wt.%; and even more preferably, from 10 to 30 wt.%.

For example, the phosphate rock is selected to comprise less than 20 wt.% of P₂O₅ based on the total weight of said phosphate rock; preferably, less than 18 wt.%; more preferably, less than 15 wt.%; even more preferably, less than 10 wt.%; and most preferably, from 1 to 9 wt.%.

For example, the fly ashes are selected from 5 to 45 wt.% of P₂O₅ based on the total weight of the fly ashes; preferably, from 8 to 40 wt.%; more preferably, from 10 to 25 wt.%; and even more preferably, from 15 to 24 wt.%.

Alternatively, the fly ashes are selected to comprise at least 1 wt.% and/or less than 20 wt.% of P₂O₅ based on the total weight of the fly ashes; preferably, less than 18 wt.%; more preferably, less than 15 wt.%; even more preferably, less than 10 wt.%; and for example, from 1 to 9 wt.%.

For example, the phosphate mineral source is an orthophosphate mineral source.

### Step (b) of acid attack of the phosphate mineral source 1

This step allows for the production of monocalcium phosphate (MCP), Ca(H₂PO₄)₂, solution 11. Indeed, the disclosure provides for the production of a purified phosphoric acid solution (31,33) that includes the production of monocalcium phosphate as an intermediate product. The MCP is thus preferably produced by digestion of the phosphate source by a concentrated strong acid aqueous solution 3.

The strong acid, namely an acid having a pKa in the water below -2, is selected from hydrochloric acid (HCl), nitric acid (HNO₃), sulfuric acid (H₂SO₄), and a mixture thereof. With preference, the strong acid is HCl and/or H₂SO₄. With preference, the strong acid is H₂SO₄.

The strong acid is used in a strong acid aqueous solution 3 having an acid concentration which is above 20 wt.% based on the total weight of the strong acid aqueous solution 3, preferably above 21 wt.%, more preferably above 22 wt.%, even more preferably above 23 wt.%, more preferably above 24 wt.%, most preferably above 25 wt.% or above 26 wt.%.

For example, when the strong acid selected at step (b) is HCl and/or HNO₃, the strong acid aqueous solution 3 has a concentration of acid ranging between 20 wt.% and 33 wt.% based on the total weight of the strong acid aqueous solution 3, or between 22 wt.% and 33 wt.%, or between 24 wt.% and 33 wt.%, or between 26 wt.% and 33 wt.%.

For example, when the strong acid selected at step (b) is H₂SO₄, the strong acid aqueous solution 3 has a concentration of acid ranging between 20 wt.% and 98 wt.% based on the total weight of the strong acid aqueous solution 3, preferably between 25 wt.% and 80 wt.%, more preferably between 30 wt.% and 75 wt.%, even more preferably between 35 wt.% and 65 wt.%.

With preference, the attack mixture 5 that is obtained by the acid attack of step (b) of the phosphate mineral source 1 with the strong acid aqueous solution 3 is viscous.

In the present invention, step (b) of acid attack of the phosphate mineral source 1 comprises the sub-steps of
(b1) attack of the phosphate mineral source 1 by a concentrated strong acid aqueous solution 3 to form an attack mixture 5;
(b2) optional addition of water to form a wet attack mixture;
(b3) maturation of the attack mixture 5 or the wet attack mixture for more than 6 hours to obtain a maturated attack mixture.

For example, sub-step (b1) of attack of the phosphate mineral source 1 by a concentrated strong acid aqueous solution 3 is performed for at least 1 min; for example, at least 5 min; for example, at least 10 minutes; for example, at least 15 minutes.

After sub-step (b1) of attack, a sub-step (b2) of addition of water is optionally performed. Sub-step (b2) is preferably performed to adjust the content of water of the attack mixture 5 during the maturation step. The content of water in the attack mixture 5 during the maturation step is less than 25 wt.%; preferably, less than 15 wt.%. This sub-step (b2) has the advantage to allow the heat release of the digestion of the phosphate by the strong acid and also the heat generated by the acid in the dilution. An air extractor can be used to cool down the mixture. Therefore, the heat balance of the further steps is under control. Since most or all the heat is removed in sub-step (b2), there is no need to instal any heat exchanger for carrying out the process. This is a great advantage in comparison to other processes that mix phosphate ore and strong acids, forming a suspension.

For example, the step (b3) of maturation of the attack mixture 5 and/or of the wet attack mixture is performed for more than 8 hours; preferably for at least 10 hours and more preferably for at least 15 hours or for at least 24 hours or for at least 30 hours; for example for at least 2 days or for more than 48 hours; for example, for at least 3 days; for example, for at least 1 week, for example for at least 2 weeks.

In an embodiment, the phosphate mineral source is fly ashes and the step (b3) of maturation of the attack mixture 5 and/or of the wet attack mixture is performed for at least 8 hours. preferably for at least 10 hours and more preferably for at least 15 hours or for at least 24 hours or for at least 30 hours; for example, for at least 2 days or for more than 48 hours.

In an embodiment, the phosphate mineral source is or comprises phosphate rock and the step (b3) of maturation of the attack mixture 5 and/or of the wet attack mixture is performed for more than 48 hours; preferably for at least 3 days; more preferably for at least 1 week, even more preferably for at least 2 weeks.

In an embodiment wherein sub-step (b2) is not performed, sub-step (b1) and sub-step (b3) can be the same step when performed at the same temperature or can be different when performed at a different temperature.

It is therefore preferred that step (b) of acid attack of the phosphate mineral source 1 by a concentrated strong acid aqueous solution 3 is performed for at least 6 hours; for example, for at least 1 day; for example, for at least 2 days; for example, for at least 3 days; for example, for at least 1 week, for example for at least 2 weeks. It is preferred that step (b) of acid attack of the phosphate mineral source 1 by a concentrated strong acid aqueous solution 3 be performed for at most one month.

One or more of the sub-steps (b1), (b2) and (b3) are performed at ambient temperature or a temperature ranging from 25 to 110°C; for example, at a temperature ranging from 30 to 90°C; for example, at a temperature ranging from 35 to 85 °C, or at a temperature ranging from 30 to 75°C. For example, sub-steps (b1) and (b2) are performed at a temperature that is higher than sub-step (b3).

### Step (c) of dilution of the attack mixture 5 and/or of the maturated attack mixture.

The monocalcium phosphate (MCP) obtained in the previous step is a water-soluble component of the attack mixture 5 or of the maturated attack mixture. Water 7 and/or a water-containing solution 9 is added. The water-containing solution 9 can be or comprise the washing water recovered after washing the residue 13 obtained at step (d) and filtering the residue solution 39. Wherein the liquid used to dilute and wash the residue 13 is selected from water, recycled pre-purified phosphoric acid solution 35, residual acid solution 37, and a mixture thereof.

In an embodiment, the water-containing solution 9 is or comprises the recycled pre-purified phosphoric acid solution 35 and/or the residual acid solution 37.

Water 7 and/or water-containing solution 9 is added to the mixture to extract the P₂O₅ contained in the MCP mixture and phosphate soluble salt as H₂PO₄⁻, HPO₄²⁻ and PO₄³⁻. It is preferred that the water and recycled acidic solutions are added in excess so that a weight ratio of more than 2:1 is used; for example, a weight ratio of water to the attack mixture of at least 3:1.

The step of dilution preferably comprises a step of heating to a temperature ranging from 30 to 80°C, for example, to a temperature ranging from 40 to 70°C, or ranging from 35 to 65°C.

The monocalcium phosphate solution 11 preferably shows a pH of at most 0.5, for example of at most 1.5; for example, of at most 2.1.

### The step (d) of impurities filtration with optional precipitation sub-step

An optional step (d) of impurities precipitation can be performed between step (c) of dilution of the attack mixture 5 or of the maturated attack mixture when sub-steps (b1) and (b3) are carried out, and step (e) of acidulation of the monocalcium phosphate solution.

The process can therefore comprise a step (d) of neutralization of the monocalcium phosphate solution 11 obtained at step (c), wherein said neutralization comprises a sub-step of adjusting the pH of the monocalcium phosphate solution to a pH that is ranging from 1.0 to 3.0 to precipitate one or more impurities 13 selected from one or more metals, gypsum or a fluoride salt.

Whether step (d) comprises the sub-step of neutralization of the monocalcium phosphate solution 11 or not, step (d) comprises the filtration of the monocalcium phosphate solution 11 to obtain a residue 13 comprising one or more impurities and a filtrate being a filtered monocalcium phosphate solution. The one or more impurities of the residue 13 comprise one or more metals, gypsum or fluoride salts.

This step is interesting because it allows, among others, to reduce the amount of digested fluor of the phosphate mineral source 1 as insoluble CaF₂ following the simplified chemical equation:

Cₐ²⁺ + 2F⁻ → CaF₂

The pH which is reached by adding limewater *(i.e.,* milk of lime) or any strong mineral base is ranging between 1.0 and 3.5, preferably between 1.0 and 3.0. For example, step (d) comprises a sub-step of adjusting the pH of the monocalcium phosphate solution 11 to a pH that is ranging from 1.2 to 2.9; preferably from 1.5 to 2.8; more preferably from 1.8 to 2.5 or from 2.1 to 2.8.

The solid separation can be conducted by any filtration system under vacuum or pressure like a filter press or a vacuum belt filter or a drum filter. Washing of the cake can be achieved by using several counter-current decanters.

Alternatively, the filtering step can comprise one or more steps of microfiltration membrane and/or one or more steps of centrifugation.

Step (d) may be performed when the phosphate mineral source 1 is or comprise phosphate rock or any fluor-containing phosphate mineral source. For example, step (d) may not be performed when the phosphate mineral source 1 is fly ashes.

### The step (e) of acidulation of the filtered MCP solution 17

This step allows for the production of phosphoric acid (H₃PO₄) solution 21 by converting all available phosphate to the phosphoric acid form.

In an embodiment, step (e) is an acidulation that is conducted to obtain a phosphoric acid solution 21 having a pH ranging from 0 to 2.5; from 0 to 1.5; more preferably from 0 to 1.0; even more preferably from 0 to 0.8; and most preferably from 0 to 0.5.

The strong acid 19, namely an acid having a pKa in the water below -2, is selected from hydrochloric acid (HCl), nitric acid (HNO₃), sulfuric acid (H₂SO₄), and a mixture thereof. With preference, the strong acid 19 is HCl and/or H₂SO₄. With preference, the strong acid is H₂SO₄.

The strong acid 19 is used in a strong acid aqueous solution having an acid concentration which is above 20 wt.%; for example, at least 25 wt.%; for example, at least 30 wt.%.

For example, as in the case where for step (b) the strong acid selected is HCl and/or HNO₃, the strong acid aqueous solution used at step (e) has a concentration of acid ranging between 20 wt.% and 33 wt.% based on the total weight of the strong acid aqueous solution, or between 22 wt.% and 33 wt.%, or between 24 wt.% and 33 wt.%, or between 26 wt.% and 33 wt.%.

For example, as in the case where for step (b) the strong acid selected is H₂SO₄, the strong acid aqueous solution used at step (e) has a concentration of acid ranging between 20 wt.% and 98 wt.% based on the total weight of the strong acid aqueous solution, preferably between 25 wt.% and 80 wt.%, more preferably between 30 wt.% and 75 wt.%, even more preferably between 35 wt.% and 65 wt.%.

It is advantageous for the good performance of the further step (g) of phosphoric acid recovery by separation through a membrane selected from a diffusion dialysis (DD) acid separation membrane, an electrodialysis-driven depletion membrane, and a nanofiltration membrane, preferably a membrane being a diffusion dialysis (DD) acid separation membrane, that the molar ratio of H⁺/P (phosphorus) of the phosphoric acid solution 21 obtained after step (e) is between 2.7 to 4.5 or between 3.0 and 4.0, preferably equal or above 3.1 more preferably equal or above 3.2, and even more preferably between 3.3 and 3.8. Sufficient free proton from the mineral acid (H₂SO₄, HCl, HNO₃...) can thus be added to the monocalcium phosphate solution 11 obtained at step (c) to reach such a molar ratio. This molar ratio helps drastically to achieve a good phosphoric acid separation yield of more than 85% with a good selectivity of cations. The available mol H⁺/P is crucial for membrane efficiency and allows for avoiding any membrane surface clogging by the precipitated metal salts (AlPO₄, FePO₄).

### The optional step (f) of pre-purification of the phosphoric acid solution 21

In an embodiment, the step of pre-purification of the phosphoric acid solution 21 comprises at least one step of ultra and/or microfiltration.

Activated carbon 23 can be added to the phosphoric acid solution 21 for removing the organic matter present in the phosphoric acid solution 21 mainly when the processing phosphate ore has a high organic content like Algerian or Egyptian phosphate rock.

The activated carbon 23 is provided in the form of powder or granules or pellets; with preference, the activated carbon 23 is provided in the form of granules.

The concentration of activated carbon 23 that is added is ranging between 0.1 and 1.0 wt.% of the total weight of said phosphoric acid solution 21, preferably between 0.1 and 0.5 wt.%, more preferably between 0.2 and 0.4 wt.%. For example, the addition of activated carbon 23 can be performed at a temperature ranging between 15°C and 100°C, preferably between 20°C and 95°C, more preferably between 55°C and 65°C. For example, the addition of activated carbon 23 can be performed during a time ranging between 1 second and 150 minutes, preferably between 30 seconds and 120 minutes, more preferably between 1 minute and 90 minutes.

In a preferred embodiment, the step (f) of pre-purification of the phosphoric acid solution 21 comprises one or more filtering steps, wherein at least one filtering step is a microfiltration step resulting in a pre-purified phosphoric acid solution 25, wherein the microfiltration step is conducted to remove solid particles 27 over 100 µm, preferably over 50 µm, more preferably over 10 µm, even more preferably 5 µm, most preferably over 1 µm and even most preferably 0.5 µm. One or more filtering steps can be conducted on any device such as a press filter, a vacuum belt filter, a drum filter, a candle filter, and a tilt pan filter. The microfiltration step can be performed on one or more filters selected from a cartridge filter, a ceramic filter and a sock filter.

The filterability is preferably ranging from 0.01 to 1 ton of cake dry basis by square meter by the hour.

The one or more filtering steps can be performed after step decantation.

Alternatively, one or more filtering steps can be replaced by one or more steps of decantation and/or one or more steps of centrifugation.

### The step (g) of separation through a membrane of the phosphoric acid

According to the disclosure, step (e) of separation through a membrane of the phosphoric acid 21 or of the pre-purified phosphoric acid solution 25 is conducted to recover a purified phosphoric acid solution 31. The membrane is selected from a diffusion dialysis (DD) acid separation membrane, an electrodialysis-driven depletion membrane, and a nanofiltration membrane, preferably from a diffusion dialysis (DD) acid separation membrane. With preference, the diffusion dialysis (DD) acid separation membrane is an ion-exchange membrane. The step (g) allows removing the heavy metals and the mono- and multivalent ions such as Na⁺, K⁺, Fe⁺⁺, Fe⁺⁺⁺, Al⁺⁺⁺, C^{r+++}, Ca⁺⁺, Mg⁺⁺, V⁺⁺⁺⁺, Ti⁺⁺⁺⁺ etc. which are rejected by the membrane.

The diffusion dialysis (DD) acid separation membranes used for the phosphoric acid separation by effect is an anion exchange membrane. The polymer backbone of the anion exchange membrane has positively charged fixed groups. Pushed by the difference in concentration, the anions in the solution migrate through the membrane while the cations are blocked.

The phosphoric acid recovery step by diffusion dialysis acid separation membrane uses concentration difference as the driving force and adopts counter-current operation. The water enters from the top inlet, and the liquid that comes out is pure recovered phosphoric acid, and the raw feed phosphoric acidic liquid to separate from its content of the cations comes from the bottom inlet, and the solution that comes out on the top of the membrane system is the residual acid solution full with the rejected cations. When the feed acid and water are sent to both sides of the anion homogeneous membrane, the concentration of the phosphoric acid and its cation salts on the feed acid side is stronger than the concentration on the waterside. Therefore, due to the concentration gradient, the feed phosphoric acid and its salts tend to permeate to the waterside, however, thanks to the selective permeability of the membrane only negative ions pass through together with H⁺. The H⁺ has a smaller hydration radius and a cationic charge, so it passes through the membrane together with the anions of the feeding solution to obtain consequently an acidic solution.

The diffusion dialysis is not an anion exchange but a migration of the anions under the concentration difference effect from the treated raw phosphoric acid solution into water The charged diaphragm blocks the cations' circulation to the waterside.

This kind of membrane is used to recover mineral acids in several applications like metal pickling acid mining waste treatment and the effluent of the metal surface polishing industry.

For example, the phosphoric acid solution 21 and/or the pre-purified phosphoric acid solution 25 comprises phosphoric acid in a content that is inferior to 35 wt.% of P₂O₅ based on the total weight of the phosphoric acid solution (21, 25), preferably inferior to 25 wt.%, more preferably inferior to 20 wt.%, even more preferably inferior to 15 wt.%, most preferably inferior to 10 wt.% or 5 wt.%.

For example, the phosphoric acid solution 21 and/or the pre-purified phosphoric acid solution 25 comprises phosphoric acid in a content ranging from 4 to 20 wt.% of P₂O₅ based on the total weight of the phosphoric acid solution 21 or of the pre-purified phosphoric acid solution 25 respectively; with preference, ranging from 5 to 15 wt.%, or 6 to 14wt.%, or from 5 to 12 wt.%, or from 8 to 10 wt.%.

The process allows a purification rate ranging from 90 to 98 % for the removed elements as demonstrated by the examples. The yield in phosphate recovery is at least 80 wt.% of P₂O₅ based on the total weight of the P₂O₅ present in the feed solution, preferably at least 82 wt.% and more preferably, at least 85 wt.%. The yield of phosphoric acid is calculated by dividing the total phosphate of the recovered pure phosphoric acid by the total content of the treated raw mixture of phosphoric acid and cations.

The diffusion dialysis membrane is cleaned in place. Its lifetime is at least 5 years, preferably at least10 years. Its processing capacity is at least 1 L/m².h, preferably at least 4 L/m².h.

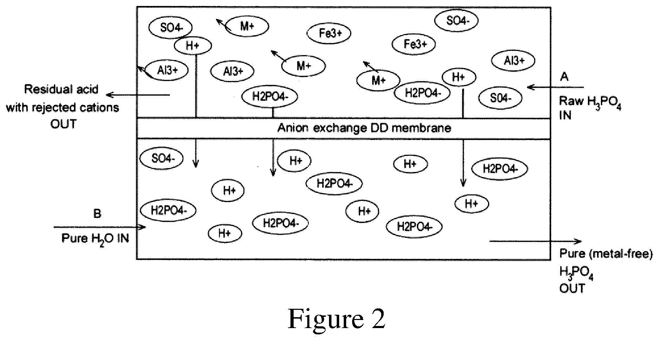

For said step (g) of separation through a membrane selected from a diffusion dialysis (DD) acid separation membrane, and as shown in figure 2, the cation-rich phosphoric acid solution is circulated on a membrane and is contacted in counter-current flow of pure water stream through an ion-exchange membrane. Starting with a feed volume of the phosphoric acid solution, a permeate of purified phosphoric acid is collected. The volume of permeate collected based on the volume of feed may range from 50% to 150%, preferably from 70% to 100%, and more preferably from 75% to 100%. The volume of permeate collected may range from 0.50 to 1.5 of the feed volume (A); for example, from 0.70 and 0.95. This ratio is controlled by the applied pure water flow (B) rate.

The diffusion dialysis membrane is preferably an organic ion exchange membrane. The membrane is a semipermeable material that can be used to separate acid from its metal content components of a feed into a permeate that passes through the material and a residual acid solution that is rejected with the cationic components. With preference, the membrane used is a composite membrane, wherein a film, forming a polymer matrix, is layered or coated on a porous support material, preferably layered or coated on at least one side of the porous support material. In the context of the present disclosure, the term "matrix" is used to define a regular, irregular and/or random arrangement of polymer molecules such that on a macromolecular scale the arrangements of molecules may show repeating patterns, or may show series of patterns that sometimes repeat and sometimes display irregularities, or may show no pattern respectively. The molecules may or may not be cross-linked. On a scale such as would be obtained from SEM, X-Ray or FTNMR, the molecular arrangement may show a physical configuration in three dimensions like those of networks, meshes, arrays, frameworks, scaffoldings, three-dimensional nets or three-dimensional entanglements of molecules. The matrix is usually non-self-supporting and has an average thickness from about 0.1 mm to about 0.6 mm, preferably about 0.1 to about 0.32 mm. In usual practice, the matrix is grossly configured as an ultrathin film or sheet.

Preferably, the film thickness is at most 0.23 mm, more preferably at most 0.14 mm, and even more preferably at most 0.12 mm.

In a preferred embodiment, the anionic exchange membranes used for this process comprise a membrane polymer matrix forming a film and support, wherein the polymer matrix is selected from the group comprising sulphonated PPO, animated polysulfone polystyrene crosslinking and amination, polystyrene co divinylbenzene aminated, aminated polysulfone, BPPO amination. Several brands are available on the market distributed by Asahi Glass, Tokuyama Co, Shandong Tianwei membrane technology Co.

The term "acid stable" when referring to a linkage means that the linkage remains intact after exposure to a solution of about 20% sulfuric acid for either one day at 40°C or 30 days at 30°C.

Preferably, the polymer may be at least partially cross-linked.

Preferably, the cross-linking is achieved through the inclusion of groups on the monomers or reagents that react with the monomers to cause additional linkages between the polymer chains.

A preferred embodiment of such a membrane is a thin film composite of aminated polysulfone. In a more preferred embodiment, the aminated polysulfone membrane contains potentially cationic functional groups to improve the cationic separation properties of the membrane. The term "cationic functional groups" includes functional groups which are cationic at virtually all pH values (e.g. quaternary amines) as well as those that can become cationic under acidic conditions or can become cationic through chemical conversion (potentially cationic groups, such as primary and secondary amines or amides).

The material constituting the semipermeable support is relatively unimportant so long as it is stable to the feed solution, and temperature, and so long as it is compatible with the thin film. Non-limiting examples of such materials include polyamide, polysulfone, polyethersulfone, polyvinylidene fluoride, polyvinylchloride, ceramics, or porous glass. Specific support materials include polysulfones, polyethersulfones, sulfonate polysulfone, sulfonate polyethersulfone, polyvinylidene fluoride, polytetrafluoroethylene, polyvinyl chloride, polystyrenes, polycarbonates, polyacrylonitriles, polyaramides, nylons, polyamides, polyimides, melamines, thermosetting polymers, polyketones (including polyether ketones and polyetheretherketones), and polyphehylenesulfide, as well as composite membrane versions of these.

In an embodiment, the composite membrane comprises an aminated polysulfone de polymer matrix forming a film located on at least one side of a porous or microporous support material; with preference, the support comprises polysulfone/polyamide.

In an embodiment, the phosphoric acid solution separation is performed through a membrane being a diffusion dialysis (DD) acid separation membrane is performed in an anionic ion exchange (AIE) membrane unit that comprises a feed tank and at least one plate and a frame comprising an anionic exchange membrane sheet, and the process comprises a step of recycling of at least a part of the residual acid solution exiting the anionic ion exchange membrane unit to the feed tank; with preference, the part of the pure phosphoric acid that is recycled to the feed tank is submitted to a step of micro-filtration, for example by using at least one micro-filter.

In an embodiment, the step (g) of separation through a membrane being a diffusion dialysis (DD) acid separation membrane is conducted at a temperature ranging from 25°C to 45°C; preferably ranging from 26°C to 45°C, more preferably ranging from 30°C to 45°C, even more preferably ranging from 35°C to 44°C and most preferably ranging from 37°C to 43°C, or from 40°C to 45°C.

The step (g) of separation through a membrane being a diffusion dialysis (DD) acid separation membrane can be conducted at a temperature of at least 35°C, preferably of at least 38°C, more preferably of at least 40°C, even more preferably of at least 28°C, most preferably of at least 29°C, even more preferably of at least 30°C.

In an embodiment, step (g) of separation through a membrane being a diffusion dialysis (DD) acid separation membrane is conducted at a treated acid / pure water ratio ranging from 0.5 to 1.5; preferably, ranging from 0.7 to 1.3; more preferably, ranging from 0.9 to 1.1.

It is also possible to improve the flow rate L/H/M2 of the membrane surface by adding pressure or an electric field system such as an electrodialysis (ED) membrane or an electrodialysis-driven depletion (EDD) system.

### The optional step (j) of concentrating the recovered purified phosphoric acid solution 31

In an embodiment, the process further comprises a step (j) of concentrating the recovered purified phosphoric acid solution 31 of step (g) to obtain a concentrated purified phosphoric acid solution 33.

In an embodiment, the optional step (j) of concentrating is conducted to obtain a concentrated purified phosphoric acid solution 33 comprising phosphoric acid in a content of at least 50 wt.% of H₃PO₄ based on the total weight of the concentrated purified phosphoric acid solution 33, preferably of at least 54 wt.%, more preferably of at least 70 wt.%, even more preferably of at least 75 wt.%, most preferably of at least 80 wt.%, and even most preferably of at least 85 wt.%.

In an embodiment, the optional step (j) of concentrating is conducted to obtain a concentrated purified phosphoric acid solution 33 comprising phosphoric acid in a content of at least 36.2 wt.% of P₂O₅ based on the total weight of the concentrated purified phosphoric acid solution 33; preferably of at least 39.1 wt.%, more preferably of at least 50.7 wt.%, even more preferably of at least 54.3 wt.%, most preferably of at least 57.97 wt.%, and even most preferably of at least 61.6 wt.%.

The step (j) of concentrating the recovered purified phosphoric acid solution 31 can be performed by any suitable means, for example, by mechanical vapour recompression or by thermal vapour recompression.

### Step (k) of production of dicalcium phosphate (DCP) salt by crystallization

The disclosure also provides a process of production of dicalcium phosphate (DCP) salt, remarkable in that it comprises the process for the production of a purified phosphoric acid solution according to the first aspect, wherein the process of production of dicalcium phosphate salt further comprises a step (k) of crystallization of dicalcium phosphate salt comprising one or more sub-steps of neutralisation of the purified phosphoric acid solution or of the concentrated purified phosphoric acid solution, wherein the neutralisation is made using a source of calcium; with preference, the source of calcium is or comprises CaCO₃ and/or Ca(OH)₂.

For example, the process comprises two sub-steps of neutralisation, wherein the first sub-step of neutralisation is a partial neutralisation and results in a de-sulphation of the purified phosphoric acid solution and in that the second sub-step of neutralisation results in the crystallization of dicalcium phosphate salt.

Advantageously, when the process for the production of a purified phosphoric acid solution according to the first aspect comprises a step (j), the concentrated purified phosphoric acid solution of step (j) comprises two sub-steps of neutralisation to perform said step (k).

With preference, the neutralisation of the purified phosphoric acid solution or of the concentrated purified phosphoric acid solution comprises the first sub-step of adjusting the pH of the purified phosphoric acid solution to a pH that is ranging from 1.0 to 3.0 to precipitate gypsum and a second sub-step of adding limewater to crystalize the dicalcium phosphate salt. With preference, said step (k) of neutralisation is made using a source of calcium, being advantageously or comprising advantageously CaCO₃ and/or Ca(OH))₂.

### Examples

### Example 1:

Sedimentary phosphate rock is provided wherein the said phosphate rock contains 29 wt.% P₂O₅, 52 wt.% CaO, 1.7 wt.% Fe₂O₃ and 1.3 wt.% Al₂O₃ based on the total weight of the phosphate rock. The remaining material is fluoride salt, CO₂, SiO₂, etc.

200 g of the sedimentary phosphate rock are mixed with 133 g of sulfuric acid 96 %. The mixture is left to react for 1 hour and then 20 g of water is added to produce a wet mixture. The wet mixture is left to mature for two weeks.

The matured mixture comprises a water-soluble component of more than 92 wt.% of P₂O₅ based on the total P₂O₅ of the phosphate ore. The maturated mixture was diluted in 732 g of water heated to 60 °C. The measured pH was 2.1.

The pH was increased to 3.5 by the addition of 25 g of slaked lime containing 10 wt.% Ca(OH)₂. 328 g of gypsum and insoluble material (on a dry matter basis) were collected by filtration. The MCP filtrate collected contains 6.3 wt.% of P₂O₅, 1.7 wt.% of Ca²⁺, 0.012 wt.% of F⁻, 76 ppm Fe and 30 ppm Al³⁺. The insoluble materials, which contain 2.5 wt.% P₂O₅ on a dry matter basis, were mixed with 345 g of an acidulated solution of 1.5 wt.% sulfuric acid. The resulting material was filtered and washed with water. The residue collected after this acidulation weighted 285 g and had a content of 0.8% P₂O₅ on a dry matter basis.

The mother liquors were added to the water used for the dissolution of superphosphate SSP. In this way, a yield greater than 92% recovery of P₂O₅ in the monocalcium phosphate solution collected is obtained and a removal yield of Fe and Al greater than 88%.

### Example 2:

100 g of the MCP filtrate of Example 1 (which contains 6.3 wt.% of P₂O₅, and 1.7 wt.% of Ca²⁺) are mixed with 4.7 g of sulfuric acid 96%. The mixture is maintained at 35 °C. for 90 min. The suspension is filtered. 7.1 g of gypsum (on a dry mass basis) was collected and washed twice with 7 g of water. The washing waters can be recycled in Example 1 for dissolving the SSP formed in Example 1. The pH is = 0 and it has a molar ratio H⁺/P of 3.2.

The phosphoric acid formed has 6.5 wt.% P₂O₅ and 0.56 wt.% SO₄²⁻.

### Example 3:

100 g of fly ashes with the following composition (see column 1 of Table 1) have been mixed with 40 g of sulfuric acid 98 % for 5 minutes and 20 g of water have been added and have been withdrawn from the mixture after 10 hours of maturation. The temperature has been raised up to 85 °C and lowered down to 45°C. Afterwards, the obtained SSP was mixed with twice its weight of pure water in an agitated reactor for 15 minutes and 15 g of sulfuric acid were added before its filtration under vacuum in filter Buchner 80 m². Before proceeding with the acid separation using the DD membrane, filtration of the collected acidic solution was made using a Glass sand core vacuum filter (with a Hole: 40mm and Eyelet Size: 10µm).

The micro-filtrated solution has the chemical composition shown in column 2 of Table 1.

Performing an acid recovery by separation of the phosphoric acid solution through a membrane being a diffusion dialysis acid separation membrane:
**Example 4:** Production of a purified solution of phosphoric acid by a membrane:
For this test, an acid recovery laboratory equipment having the following parameters has been used:
Outline size: 200 mm X 400 mm
Effective size: 160 mm X 320 mm
Thickness: 0.55 mm
Applicable temperature: < 45°C
Applicable pH : 0-14

The flows of feed acid and pure water are controlled at 10 ml per minute by adjusting the rotation speed of the peristaltic pump. The actual pure water inflow and feeding amount was measured by measuring the bac cylinder and pump stopwatch. The outlet samples of the residual acid solution were collected and pure acid was recovered (see column 3 of table 1) after 5 hours of operation.

After having carried out a second pass, the collected pure acid is of very high purity as shown in below table 1 column 4.

The results show that a separation rate of bi- and trivalent cations worth greater than 95% was obtained. This allows the synthesis, after evaporation, of concentrated phosphoric acid having a grade equivalent to a feed, fertilizer and technical grade.

### Example 5: DCP synthesis

100g at 8.5% P₂O₅ of the pure acid solution obtained in Example 4 during the first pass is neutralized with 78.75 g of slaked lime at 15% Ca(OH)₂. The pH of the suspension formed is 5.6 and 21 g of the DCP formed was filtered and dried at 110°C. The analysis of DCP was: 18.3% P, 30% Ca, and heavy metals are below 5 ppm. This product can be used for TSP/SSP fertilizer production as it satisfies all heavy metals regulations of the agriculture application.

**Table 1: Analysis of DD membrane input and collected flows in the anionic exchange membrane acid separation step (e)**

| | | Fly ash | Raw acid | Pure separated acid | Second pass of the Pure acid | Extrapolation 54 wt.% |
|---|---|---|---|---|---|---|
| | | (1) | (2) | (3) | (4) | P₂O₅ basis |
| P₂O₅ | % | 23.2 | 12.1% | 10.31 | 8.5 | 54 |
| Al | % | 6 | 1.8 | 0.09 | 0.012 | 0.0762 |
| As | mg/g | 35 | 5.25 | 0.5 | 0.02 | 0.12 |
| Ca | % | 12.5 | 0.01 | 0.003 | 0.0002 | 0.001 |
| Cr | mg/g | 130 | 16.6 | 1.2 | 0.08 | 0.5 |
| Cu | mg/g | 1200 | 210 | 2.5 | 0.18 | 1.1 |
| Fe | % | 9.4 | 0.74 | 0.08 | 0.0045 | 0.028 |
| K | % | 2.2 | 0.94 | 0.0179 | 0.008 | 0.050 |
| Mg | % | 0.7 | 0.28 | 0.039 | 0.0027 | 0.0172 |
| Na | % | 0.65 | 0.275 | 0.0215 | 0.0017 | 0.0108 |
| Pb | mg/g | 250 | 56 | 0.3 | 0.1 | 0.63 |
| SiO₂ | % | 23 | 0.001 | 0.0003 | BDL | BDL |
| Zn | mg/g | 2950 | 713 | 23.6 | 0.28 | 1.77 |

## Claims

1. A process for the production of a purified phosphoric acid solution (31,33), wherein the process comprises the following steps:
(a) provision of a phosphate mineral source (1); with preference, the phosphate mineral source (1) is selected from phosphate rock, fly ashes, and a mixture thereof;
(b) acid attack of the phosphate mineral source (1) by a concentrated strong acid aqueous solution (3) to obtain an attack mixture (5);
wherein step (b) comprises the sub-steps of:
(b1) attack of the phosphate mineral source (1) by a concentrated strong acid aqueous solution (3) to form an attack mixture (5);
wherein the strong acid is selected from HCl, H₂SO₄, HNO₃, and a mixture thereof; and wherein the strong acid aqueous solution (3) has a concentration of acid that is above 20 wt.% based on the total weight of the strong acid aqueous solution (3);
(b2) optional addition of water to form a wet attack mixture; and
(b3) maturation of the attack mixture (5) or the wet attack mixture for more than 6 hours to obtain a maturated attack mixture;
wherein the content of water in the attack mixture (5) during the maturation step is less than 25 wt.% of the total weight of the attack mixture (5);
(c) dilution in water (7) and/or a water-containing solution (9) of the maturated attack mixture (5) to obtain a monocalcium phosphate solution (11);
(d) filtration of the monocalcium phosphate solution (11) to obtain a residue (13) comprising one or more impurities and a filtrate being a filtered monocalcium phosphate solution (17);
(e) acidulation of the filtered monocalcium phosphate solution (17) by a strong acid (19) selected from HCl, H₂SO₄, HNO₃, and a mixture thereof, to obtain a phosphoric acid solution (21);
(f) optional pre-purification of the phosphoric acid solution (21) to obtain a pre-purified phosphoric acid solution (25); and
(g) separation through a membrane of the phosphoric acid solution (21) or of the pre-purified phosphoric acid solution (25) to recover a purified phosphoric acid solution (31), wherein the membrane is selected from a diffusion dialysis acid separation membrane, an electrodialysis-driven depletion membrane, and a nanofiltration membrane.

2. The process according to claim 1, wherein sub-step (b1) of attack of the phosphate mineral source (1) by a concentrated strong acid aqueous solution (3) is performed during at least 5 minutes.

3. The process according to claim 1 or claim 2, wherein the content of water in the attack mixture (5) during the maturation step (b3) is less than 15 wt.% of the total weight of the attack mixture (5).

4. The process according to any one of claims 1 to 3, wherein step (d) of filtration of the monocalcium phosphate solution further comprises a sub-step of neutralization that is performed before filtration; wherein the sub-step of neutralization comprises adjusting the pH of the monocalcium phosphate solution to a pH that is ranging from 1.0 to 3.0 to precipitate one or more impurities; with preference, the sub-step of neutralisation is made using a source of calcium (15).

5. The process according to any one of claims 1 to 4, wherein step (g) is a step of separation through a diffusion dialysis acid separation membrane to recover purified phosphoric solution (31); and/or wherein the membrane used at step (g) is a composite membrane comprising a film and a porous support material, wherein the film comprises a polymer matrix and is layered on the porous support material; and wherein the polymer matrix is selected from polyolefins, polysulfones, polyethers, polysulfonamides, polyamines, polysulfides, and melamine polymers; and/or wherein the step (g) of separation through a membrane is conducted at a temperature ranging from 10°C to 45°C and/or at a pressure ranging from 0.1 to 6.0 MPa.

6. The process according to any one of claims 1 to 5, wherein the process further comprises a step (f) of pre-purification of the phosphoric acid solution (21), wherein step (f) comprises a step of addition of activated carbon to the phosphoric acid solution obtained at step (e) and/or wherein step (f) comprises one or more filtering steps, wherein at least one filtering step is a microfiltration step that is conducted to remove solid particles over 10 µm; with preference, over 1 µm.

7. The process according to any one of claims 1 to 6, wherein the molar ratio of H⁺/P of the phosphoric acid solution (21) or of the pre-purified phosphoric acid solution (25) before step (g) is adjusted to be ranging between 3.0 and 4.0; preferably, adjusting the molar ratio of H⁺/P of the phosphoric acid solution or the pre-purified phosphoric acid solution before step (g) is done by addition of a strong acid; with preference, the strong acid is selected from HCl, H₂SO₄, HNO₃, and a mixture thereof.

8. The process according to any one of claims 1 to 7, wherein the membrane (29) of step (g) is a diffusion dialysis acid separation membrane, wherein step (g) is performed in an anionic ion-exchange membrane unit that comprises a feed tank and at least one plate and a frame comprising an anionic exchange membrane sheet, and wherein the process comprises a step of recycling of at least a part of the residual acid solution exiting the anionic ion exchange membrane unit to the feed tank; with preference, the part of the residual acid solution that is recycled to the feed tank is submitted to a step of micro-filtration.

9. The process according to any one of claims 1 to 8, wherein the process further comprises a step (j) of concentrating the recovered purified phosphoric acid solution (31) of step (g) to obtain a concentrated purified phosphoric acid solution (33).

10. The process according to any one of claims 1 to 9, wherein the process further comprises a step (h) of recycling a part of the pre-purified phosphoric acid solution (25) to obtain a recycled pre-purified phosphoric acid solution (35) and/or of recycling a part of the residual acid solution (37) obtained at step (g), and wherein the process further comprises a step (i) of diluting the residue (13) obtained at step (d) in the recycled pre-purified phosphoric acid solution (35) and/or in the residual acid solution (37) to form a residue solution (39); with preference, the residue solution is filtered resulting in a cake residue (41) and a water-containing solution (9) that is recycled in step (c) to dilute the attack mixture (5).

11. The process according to any one of claims 1 to 10, wherein the phosphate mineral source comprises from 1 to 40 wt.% of P₂O₅ based on the total weight of said phosphate mineral source.

12. The process according to any one of claims 1 to 11, wherein:
the strong acid selected at step (b) is H₂SO₄, and the strong acid aqueous solution has a concentration of acid ranging between 20 wt.% and 98 wt.% based on the total weight of the strong acid aqueous solution; or
the strong acid selected at step (b) is selected from HCl, HNO₃, and a mixture thereof, and the strong acid aqueous solution has a concentration of acid ranging between 20 wt.% and 33 wt.% based on the total weight of the strong acid aqueous solution.

13. The process according to any one of claims 1 to 12, wherein step (b3) of maturation of the attack mixture (5) and/or of the wet attack mixture is performed for at least 10 hours; with preference, for more than 48 hours.

14. The process according to any one of claims 1 to 13, wherein:
the phosphate mineral source (1) is fly ashes and step (b3) of maturation of the attack mixture (5) and/or of the wet attack mixture is performed for at least 8 hours; or
the phosphate mineral source (1) is or comprises phosphate rock and step (b3) of maturation of the attack mixture (5) and/or of the wet attack mixture is performed for more than 48 hours.

15. A process of production of dicalcium phosphate salt (47, 49), wherein the process comprises the process for the production of a purified phosphoric acid solution (31, 33) according to the process of any one of claims 1 to 14, wherein the process of production of dicalcium phosphate salt (47, 49) further comprises a step (k) of crystallization of dicalcium phosphate salt (47) comprising one or more sub-steps of neutralisation of the purified phosphoric acid solution (31) or of the concentrated purified phosphoric acid solution (33), wherein the neutralisation is made using a source of calcium (43); with preference, the source of calcium (43) is or comprises CaCO₃ and/or Ca(OH)₂.

## Patentansprüche

1. Ein Verfahren zur Herstellung einer gereinigten Phosphorsäurelösung (31,33), wobei das Verfahren folgende Schritte umfasst:
(a) Bereitstellen einer Phosphatmineralquelle (1); vorzugsweise wird die Phosphatmineralquelle (1) aus Phosphatgestein, Flugasche und einer Mischung davon ausgewählt;
(b) Säureangreifen der Phosphatmineralquelle (1) durch eine konzentrierte stark saure wässrige Lösung (3), um ein Angriffsgemisch (5) zu erhalten;
wobei Schritt (b) die folgenden Teilschritte umfasst:
(b1) Angreifen der Phosphatmineralquelle (1) durch eine konzentrierte stark saure wässrige Lösung (3) zur Bildung eines Angriffsgemisches (5);
wobei die starke Säure aus HCl, H₂SO₄, HNO₃ und einer Mischung davon ausgewählt wird; und wobei die wässrige Lösung der starken Säure (3) eine Säurekonzentration von über 20 Gew.-% basierend auf dem Gesamtgewicht der wässrigen Lösung der starken Säure (3) aufweist;
(b2) optionales Zugeben von Wasser zur Bildung eines nassen Angriffsgemisches; und
(b3) Reifen des Angriffsgemisches (5) oder des Nassangriffsgemisches für mehr als 6 Stunden, um ein gereiftes Angriffsgemisch zu erhalten;
wobei der Wassergehalt in dem Angriffsgemisch (5) während des Reifungsschritts weniger als 25 Gew.-% des Gesamtgewichts des Angriffsgemisches (5) beträgt;
(c) Verdünnen des gereiften Angriffsgemisches (5) in Wasser (7) und/oder einer wasserhaltigen Lösung (9), um eine Monokalziumphosphatlösung (11) zu erhalten;
(d) Filtrieren der Monocalciumphosphatlösung (11), um einen Rückstand (13) zu erhalten, der eine oder mehrere Verunreinigungen und ein Filtrat, das eine gefilterte Monocalciumphosphatlösung (17) ist, umfasst;
(e) Säurebehandeln der gefilterten Monocalciumphosphatlösung (17) mit einer starken Säure (19), ausgewählt aus HCl, H₂SO₄, HNO₃ und einer Mischung davon, um eine Phosphorsäurelösung (21) zu erhalten;
(f) optionales Vorreinigen der Phosphorsäurelösung (21), um eine vorgereinigte Phosphorsäurelösung (25) zu erhalten; und
(g) Trennen durch eine Membran der Phosphorsäurelösung (21) oder der vorgereinigten Phosphorsäurelösung (25) zur Rückgewinnung einer gereinigten Phosphorsäurelösung (31), wobei die Membran aus einer Diffusionsdialysesäure-Trennmembran, einer elektrodialysegetriebenen Depletionsmembran und einer Nanofiltrationsmembran ausgewählt ist.

2. Das Verfahren nach Anspruch 1, wobei der Teilschritt (b1) des Angriffs der Phosphatmineralquelle (1) durch eine konzentrierte wässrige Lösung einer starken Säure (3) über einen Zeitraum von mindestens 5 Minuten durchgeführt wird.

3. Das Verfahren nach Anspruch 1 oder Anspruch 2, wobei der Wassergehalt im Angriffsgemisch (5) während des Reifeschrittes (b3) weniger als 15 Gew.-% des Gesamtgewichts des Angriffsgemisches (5) beträgt.

4. Das Verfahren nach einem der Ansprüche 1 bis 3, wobei Schritt (d) der Filtration der Monocalciumphosphatlösung weiter einen Teilschritt des Neutralisierens umfasst, der vor dem Filtrieren durchgeführt wird; wobei der Teilschritt des Neutralisierens das Einstellen des pH-Werts der Monocalciumphosphatlösung auf einen pH-Wert von 1,0 bis 3,0 umfasst, um eine oder mehrere Verunreinigungen auszufällen; vorzugsweise erfolgt der Teilschritt des Neutralisierens unter Verwendung einer Calciumquelle (15).

5. Das Verfahren nach einem der Ansprüche 1 bis 4, wobei Schritt (g) ein Trennschritt durch eine Diffusionsdialyse-Säuretrennmembran ist, um eine gereinigte Phosphorsäurelösung (31) zurückzugewinnen; und/oder wobei die in Schritt (g) verwendete Membran eine Verbundmembran ist, die aus einem Film und einem porösen Trägermaterial besteht, wobei der Film eine Polymermatrix umfasst und auf dem porösen Trägermaterial geschichtet ist; und wobei die Polymermatrix aus Polyolefinen, Polysulfonen, Polyethern, Polysulfonamiden, Polyaminen, Polysulfiden und Melaminpolymeren ausgewählt ist; und/oder wobei der Schritt (g) des Trennens durch eine Membran bei einer Temperatur von 10 °C bis 45 °C und/oder bei einem Druck von 0,1 bis 6,0 MPa durchgeführt wird.

6. Das Verfahren nach einem der Ansprüche 1 bis 5, wobei das Verfahren weiter einen Schritt (f) des Vorreinigens der Phosphorsäurelösung (21) umfasst, wobei Schritt (f) einen Schritt der Zugabe von Aktivkohle zur in Schritt (e) erhaltenen Phosphorsäurelösung und/oder wobei Schritt (f) ein oder mehrere Filtrationsschritte umfasst, wobei mindestens ein Filtrationsschritt ein Mikrofiltrationsschritt ist, der durchgeführt wird, um feste Partikel über 10 µm zu entfernen; bevorzugt über 1 µm.

7. Das Verfahren nach einem der Ansprüche 1 bis 6, wobei das molare Verhältnis von H⁺/P der Phosphorsäurelösung (21) oder der vorgereinigten Phosphorsäurelösung (25) vor Schritt (g) auf einen Bereich von 3,0 bis 4,0 eingestellt wird; vorzugsweise erfolgt die Einstellung des molaren Verhältnisses von H⁺/P der Phosphorsäurelösung oder der vorreinigen Phosphorsäurelösung vor Schritt (g) durch Zugeben einer starken Säure; vorzugsweise wird die starke Säure aus HCl, H₂SO₄, HNO₃ und einer Mischung davon ausgewählt.

8. Das Verfahren nach einem der Ansprüche 1 bis 7, wobei die Membran (29) des Schrittes (g) eine Diffusionsdialyse-Säuretrennmembran ist, wobei Schritt (g) in einer anionischen Ionenaustauschmembraneinheit durchgeführt wird, die einen Vorratstank und mindestens eine Platte sowie einen Rahmen mit einem anionischen Austauschmembranblatt umfasst, und wobei das Verfahren einen Schritt zur Wiederverwertung von mindestens einem Teil der verbleibenden Säurelösung, welche die anionische Ionenaustauschmembraneinheit verlässt, in den Vorratstank umfasst; vorzugsweise wird der Teil der verbleibenden Säurelösung, der in den Speichertank zurückgeführt wird, einer Mikrofiltrationsstufe unterzogen.

9. Das Verfahren nach einem der Ansprüche 1 bis 8, wobei das Verfahren weiter einen Schritt (j) umfasst, in dem die zurückgewonnene gereinigte Phosphorsäurelösung (31) aus Schritt (g) konzentriert wird, um eine konzentrierte gereinigte Phosphorsäurelösung (33) zu erhalten.

10. Das Verfahren nach einem der Ansprüche 1 bis 9, wobei das Verfahren weiter einen Schritt (h) umfasst, bei dem ein Teil der vorreinigten Phosphorsäurelösung (25) recycelt wird, um eine recycelte vorgereinigte Phosphorsäurelösung (35) zu erhalten und/oder ein Teil der bei Schritt (g) erhaltenen Restsäurelösung (37) recycelt wird, und wobei das Verfahren weiter einen Schritt umfasst (i) den Rückstand (13), der in Schritt (d) erhalten wurde, in der recycelten, vorgefilterten Phosphorsäurelösung (35) und/oder in der Restsäurelösung (37) zu verdünnen, um eine Rückstandslösung (39) zu bilden; vorzugsweise wird die Rückstandslösung gefiltert, was zu einem Kuchenrückstand (41) und einer wasserhaltigen Lösung (9) führt, die in Schritt (c) recycelt wird, um das Angriffsgemisch (5) zu verdünnen.

11. Das Verfahren nach einem der Ansprüche 1 bis 10, wobei die Phosphatmineralquelle 1 bis 40 Gew.-% P₂O₅ basierend auf dem Gesamtgewicht der Phosphatmineralquelle umfasst.

12. Das Verfahren nach einem der Ansprüche 1 bis 11, wobei:
die in Schritt (b) ausgewählte starke Säure H₂SO₄ ist, und die wässrige Lösung der starken Säure eine Säurekonzentration von 20 Gew.% bis 98 Gew.% aufweist, basierend auf dem Gesamtgewicht der wässrigen Lösung der starken Säure; oder
die in Schritt (b) ausgewählte starke Säure ausgewählt ist aus HCl, HNO₃ und einer Mischung davon, und die wässrige Lösung der starken Säure eine Säurekonzentration von 20 Gew.-% bis 33 Gew.-% aufweist, basierend auf dem Gesamtgewicht der wässrigen Lösung der starken Säure.

13. Das Verfahren nach einem der Ansprüche 1 bis 12, wobei Schritt (b3) des Reifens des Angriffsgemisches (5) und/oder des feuchten Angriffsgemisches für mindestens 10 Stunden durchgeführt wird; vorzugsweise für mehr als 48 Stunden.

14. Das Verfahren nach einem der Ansprüche 1 bis 13, wobei:
die Phosphatmineralquelle (1) Flugasche ist und Schritt (b3) des Reifens des Angriffsgemisches (5) und/oder des Nassangriffsgemisches für mindestens 8 Stunden durchgeführt wird; oder
die Phosphatmineralquelle (1) Phosphatgestein ist oder umfasst und Schritt (b3) des Reifens des Angriffsgemisches (5) und/oder des Nassangriffsgemisches länger als 48 Stunden durchgeführt wird.

15. Ein Verfahren zur Herstellung von Dicalciumphosphatsalz (47, 49), wobei das Verfahren das Verfahren zur Herstellung einer gereinigten Phosphorsäurelösung (31, 33) gemäß dem Verfahren nach einem der Ansprüche 1 bis 14 umfasst, wobei das Verfahren zur Herstellung von Dicalciumphosphatsalz (47, 49) weiter einen Schritt (k) des Kristallisierens von Dicalciumphosphatsalz (47) umfasst, der einen oder mehrere Teilschritte des Neutralisierens der gereinigten Phosphorsäurelösung (31) oder der konzentrierten, gereinigten Phosphorsäurelösung (33) umfasst, wobei das Neutralisieren unter Verwendung einer Calciumquelle (43) erfolgt; vorzugsweise ist oder umfasst die Calciumquelle (43) CaCO₃ und/oder Ca(OH)₂.

## Revendications

1. Un procédé de production d'une solution d'acide phosphorique purifiée (31, 33), dans lequel le procédé comprend les étapes suivantes :
(a) mise à disposition d'une source minérale de phosphate (1) ; de préférence, la source minérale de phosphate (1) est choisie parmi la roche phosphatée, les cendres volantes, et un mélange de celles-ci ;
(b) attaque acide de la source minérale de phosphate (1) par une solution aqueuse concentrée d'acide fort (3) pour obtenir un mélange d'attaque (5) ;
dans lequel l'étape (b) comprend les sous-étapes suivantes :
(bl) attaque de la source minérale de phosphate (1) par une solution aqueuse concentrée d'acide fort (3) pour former un mélange d'attaque (5) ;
dans lequel l'acide fort est choisi parmi le HCl, le H₂SO₄, le HNO₃, et un mélange de ceux-ci ; et dans lequel la solution aqueuse d'acide fort (3) a une concentration en acide supérieure à 20 % p/p par rapport au poids total de la solution aqueuse d'acide fort (3) ;
(b2) l'ajout facultatif d'eau pour former un mélange d'attaque humide ; et
(b3) la maturation du mélange d'attaque (5) ou du mélange d'attaque humide pendant plus de 6 heures pour obtenir un mélange d'attaque maturé ;
dans lequel la teneur en eau du mélange d'attaque (5) pendant l'étape de maturation est inférieure à 25 % p/p du poids total du mélange d'attaque (5) ;
(c) dilution dans de l'eau (7) et/ou une solution aqueuse (9) du mélange d'attaque maturé (5) pour obtenir une solution de phosphate monocalcique (11) ;
(d) filtration de la solution de phosphate monocalcique (11) pour obtenir un résidu (13) comprenant une ou plusieurs impuretés et un filtrat qui est une solution filtrée de phosphate monocalcique (17) ;
(e) acidulation de la solution de phosphate monocalcique filtrée (17) par un acide fort (19) choisi parmi HCl, H₂SO₄, HNO₃, et un mélange de ceux-ci, pour obtenir une solution d'acide phosphorique (21) ;
(f) pré-purification facultative de la solution d'acide phosphorique (21) pour obtenir une solution d'acide phosphorique prépurifiée (25) ; et
(g) séparation par une membrane de la solution d'acide phosphorique (21) ou de la solution d'acide phosphorique prépurifiée (25) pour récupérer une solution d'acide phosphorique purifiée (31), dans laquelle la membrane est choisie parmi une membrane de séparation d'acide par dialyse par diffusion, une membrane d'épuisement par électrodialyse et une membrane de nanofiltration.

2. Le procédé selon la revendication 1, dans lequel la sous-étape (b1) consistant à attaquer la source minérale de phosphate (1) à l'aide d'une solution aqueuse concentrée d'acide fort (3) est réalisée pendant au moins 5 minutes.

3. Le procédé selon la revendication 1 ou la revendication 2, dans lequel la teneur en eau du mélange d'attaque (5) pendant l'étape de maturation (b3) est inférieure à 15 % p/p du poids total du mélange d'attaque (5).

4. Le procédé selon l'une quelconque des revendications 1 à 3, dans lequel l'étape (d) de filtration de la solution de phosphate monocalcique comprend en outre une sous-étape de neutralisation qui est effectuée avant la filtration ; dans lequel la sous-étape de neutralisation consiste à ajuster le pH de la solution de phosphate monocalcique à une valeur comprise entre 1,0 et 3,0 afin de précipiter une ou plusieurs impuretés ; de préférence, la sous-étape de neutralisation est réalisée à l'aide d'une source de calcium (15).

5. Le procédé selon l'une quelconque des revendications 1 à 4, dans lequel l'étape (g) consiste à effectuer une séparation à l'aide d'une membrane de séparation acide par dialyse par diffusion afin de récupérer une solution de phosphorique purifiée (31) ; et/ou dans laquelle la membrane utilisée à l'étape (g) est une membrane composite comprenant un film et un matériau de support poreux, le film comprenant une matrice polymère et étant disposé en couche sur le matériau de support poreux ; et dans laquelle la matrice polymère est choisie parmi les polyoléfines, les polysulfones, les polyéthers, les polysulfonamides, les polyamines, les polysulfures et les polymères de mélamine ; et/ou dans lequel l'étape (g) de séparation à travers une membrane est réalisée à une température comprise entre 10 °C et 45 °C et/ou à une pression comprise entre 0,1 et 6,0 MPa.

6. Le procédé selon l'une quelconque des revendications 1 à 5, dans lequel le procédé comprend en outre une étape (f) de pré-purification de la solution d'acide phosphorique (21), dans lequel l'étape (f) comprend une étape d'ajout de charbon actif à la solution d'acide phosphorique obtenue à l'étape (e) et/ou dans lequel l'étape (f) comprend une ou plusieurs étapes de filtration, dans lesquelles au moins une étape de filtration est une étape de microfiltration réalisée pour éliminer les particules solides de plus de 10 µm ; de préférence, de plus de 1 µm.

7. Le procédé selon l'une quelconque des revendications 1 à 6, dans lequel le rapport molaire H⁺/P de la solution d'acide phosphorique (21) ou de la solution d'acide phosphorique prépurifiée (25) avant l'étape (g) est ajusté pour se situer de 3,0 à 4,0 ; de préférence, l'ajustement du rapport molaire H⁺/P de la solution d'acide phosphorique ou de la solution d'acide phosphorique prépurifiée avant l'étape (g) est effectué par addition d'un acide fort ; de préférence, l'acide fort est choisi parmi HCl, H₂SO₄, HNO₃, et un mélange de ceux-ci.

8. Le procédé selon l'une quelconque des revendications 1 à 7, dans lequel la membrane (29) de l'étape (g) est une membrane de séparation acide par dialyse par diffusion, dans lequel l'étape (g) est réalisée dans une unité à membrane d'échange d'ions anioniques qui comprend un réservoir d'alimentation et au moins une plaque et un cadre comprenant une feuille de membrane d'échange d'ions anioniques, et dans lequel le procédé comprend une étape de recyclage d'au moins une partie de la solution acide résiduelle sortant de l'unité à membrane d'échange d'ions anioniques vers le réservoir d'alimentation ; de préférence, la partie de la solution acide résiduelle qui est recyclée vers le réservoir d'alimentation est soumise à une étape de microfiltration.

9. Le procédé selon l'une quelconque des revendications 1 à 8, **caractérisé en ce qu'**il comprend en outre une étape (j) consistant à concentrer la solution d'acide phosphorique purifié récupérée (31) de l'étape (g) afin d'obtenir une solution concentrée d'acide phosphorique purifié (33).

10. Le procédé selon l'une quelconque des revendications 1 à 9, **caractérisé en ce qu'**il comprend en outre une étape (h) consistant à recycler une partie de la solution d'acide phosphorique prépurifiée (25) pour obtenir une solution d'acide phosphorique prépurifiée recyclée (35) et/ou à recycler une partie de la solution d'acide résiduelle (37) obtenue à l'étape (g), et dans lequel le procédé comprend en outre une étape (i) consistant à diluer le résidu (13) obtenu à l'étape (d) dans la solution d'acide phosphorique prépurifiée recyclée (35) et/ou dans la solution d'acide résiduelle (37) pour former une solution de résidu (39) ; de préférence, la solution de résidus est filtrée, ce qui donne un résidu sous forme de gâteau (41) et une solution aqueuse (9) qui est recyclée à l'étape (c) pour diluer le mélange d'attaque (5).

11. Le procédé selon l'une quelconque des revendications 1 à 10, dans lequel la source de minéral phosphaté contient de 1 à 40 % p/p de P₂O₅ par rapport au poids total de ladite source de minéral phosphaté.

12. Le procédé selon l'une quelconque des revendications 1 à 11, dans lequel :
l'acide fort choisi à l'étape (b) est H₂SO₄, et la solution aqueuse d'acide fort présente une concentration en acide comprise entre 20 % p/p et 98 % p/p par rapport au poids total de la solution aqueuse d'acide fort ; ou
l'acide fort choisi à l'étape (b) est choisi parmi HCl, HNO₃ et un mélange de ceux-ci, et la solution aqueuse d'acide fort a une concentration en acide comprise entre 20 % p/p et 33 % p/p par rapport au poids total de la solution aqueuse d'acide fort.

13. Le procédé selon l'une quelconque des revendications 1 à 12, dans lequel l'étape (b3) de maturation du mélange d'attaque (5) et/ou du mélange d'attaque humide est réalisée pendant au moins 10 heures ; de préférence, pendant plus de 48 heures.

14. Le procédé selon l'une quelconque des revendications 1 à 13, dans lequel :
la source minérale de phosphate (1) est constituée de cendres volantes et l'étape (b3) de maturation du mélange d'attaque (5) et/ou du mélange d'attaque humide est réalisée pendant au moins 8 heures ; ou
la source minérale de phosphate (1) est constituée de roche phosphatée ou en contient, et l'étape (b3) de maturation du mélange d'attaque (5) et/ou du mélange d'attaque humide est réalisée pendant plus de 48 heures.

15. Un procédé de production de sel de phosphate dicalcique (47, 49), dans lequel le procédé comprend le procédé de production d'une solution d'acide phosphorique purifiée (31, 33) selon le procédé selon l'une quelconque des revendications 1 à 14, dans lequel le procédé de production de sel de phosphate dicalcique (47, 49) comprend en outre une étape (k) de cristallisation du sel de phosphate dicalcique (47) comprenant une ou plusieurs sous-étapes de neutralisation de la solution d'acide phosphorique purifiée (31) ou de la solution d'acide phosphorique purifiée concentrée (33), dans lequel la neutralisation est effectuée à l'aide d'une source de calcium (43) ; de préférence, la source de calcium (43) est ou comprend du CaCO₃ et/ou du Ca(OH)₂.
